Europäisches Patentamt

(19) European Patent Office

Office européen des brevets

(11) Numéro de publication: **0 362 414**
**A1**

(12) **DEMANDE DE BREVET EUROPEEN PUBLI E EN APPLICATION DE L'article 158, paragraphe 3 de la CBE**

(21) Numéro de dépôt: 89904879.7

(22) Date de dépôt: 28.02.89

(86) Numéro de dépôt internationale :
PCT/SU89/00054

(87) Numéro de publication internationale :
WO 89/09401 (05.10.89 89/24)

(51) Int. Cl.5: **G01N 33/20** , **G01N 25/02** ,
**G01N 25/12**

(30) Priorité: 28.03.88 SU 4393405

(43) Date de publication de la demande:
11.04.90 Bulletin 90/15

(84) Etats contractants désignés:
**CH DE FR GB IT LI SE**

(71) Demandeur: **INSTITUT METALLURGII IMENI
A.A.BAIKOVA AKADEMII NAUK SSSR**
**Leninsky pr., 49**
**Moscow, 117334(SU)**

(72) Inventeur: **SNIGIR, Alexandr Nikolaevich**
**Litovsky bulvar, 18-204**
**Moscow, 117588(SU)**
Inventeur: **DUDIK, Andrei Viktorovich**
**ul. Zelenogradskaya, 19-35**
**Moscow, 125475(SU)**
Inventeur: **KURITNYK, Igor Petrovich**
**ul. Druzhby, 1-8**
**Lvov, 290034(SU)**
Inventeur: **FEDINETS, Vasily Alexeevich**
**ul. Fedorenko, 32-41**
**Lvov, 290031(SU)**

(74) Mandataire: **Durand, Yves Armand Louis et al**
**Cabinet Z. Weinstein 20, Avenue de**
**Friedland**
**F-75008 Paris(FR)**

(54) **CELLULE DE MESURE POUR ANALYSER LA FORMATION DE LA STRUCTURE DES ALLIAGES.**

(57) L'invention concerne la métallurgie.

La cellule de mesure comporte deux tubes (1, 2) placés coaxialement et un thermocouple (3) disposé dans le tube intérieur (2). Le tube extérieur (1) est muni d'une coiffe (5) avec un orifice (8) pour la prise d'un échantillon. La partie supérieure du tube extérieur (1) porte fixée une douille (10) en matériau réfractaire arbritant le porte-thermocouple (11) du thermocouple (3) avec des bornes (12) incorporées. La zone (13) de raccordement du thermocouple (3) aux bornes (12) est disposée entre la douille (10) et le porte-thermocouple (11) et est isolée du milieu ambiant.

La présente invention s'applique, par exemple, au contrôle de qualité automatisé de métal à fusion commandée par ordinateur.

FIG.1

"Cellule de mesure pour analyser la formation de la structure des alliages".

Domaine de l'invention.

La présente invention concerne la métallurgie, plus particulièrement, une cellule de mesure pour analyser la formation de la structure des alliages et peut être utilisée avec succès pour déterminer le mode optimal de traitement du métal fondu dans la poche.

Etat de la technique.

Il existe une cellule de mesure pour analyser la formation de la structure des alliages qui comporte un cylindre à fond en acier au bas carbone avec des fentes dans la paroi, un thermocouple sous une coiffe protectrice disposé au centre du cylindre et une douille fixant le thermocouple au centre de la cavité réceptrice du cylindre. Une telle cellule de mesure assure un refroidissement rapide d'un échantillon de métal en élevant la sensibilité aux effets thermiques de la formation de la structure.

Cependant la cellule de mesure existante a les inconvénients suivants :

- possibilité technologiquement limitée de son utilisation pour analyser les alliages à haute température de fusion ou à haute température de surchauffe du métal fondu à cause de la fusion des parois du cylindre ;

- la température de l'alliage dépend du mode d'évacuation de la chaleur ;

- la non observation de la condition d'égalisation des températures du métal fondu et des parois du cylindre entraîne l'apparition de phases métastables.

Outre cela, une telle structure de la cellule ne permet que la prise de l'échantillon dans les couches superficielles du métal fondu qui peuvent contenir une quantité excédente de gaz, d'inclusions non métalliques et de scories par rapport à la masse principale du métal fondu.

Il existe aussi un échantillonneur qui, après la prise de l'échantillon, est branché sur une cellule de mesure pour la lecture des mesures (cf. la demande de brevet SU N° 4314854 des mêmes auteurs).

Un tel échantillonneur comporte deux tubes en verre de quartz installés coaxialement et reliés entre eux par le haut et un thermocouple placé dans le tube intérieur. Le tube extérieur est muni d'une coiffe avec orifice pour la prise de l'échantillon, l'orifice se trouvant dans la partie supérieure de la coiffe dans la zone de son accouplement au tube.

Cependant, l'échantillonneur de cette construction doit être branché sur la cellule de mesure avant la prise de l'échantillon. Ceci augmente le temps d'analyse de la qualité du métal. Outre cela, un tel branchement peut provoquer des erreurs dans l'établissement de la courbe de cristallisation.

Exposé de l'invention.

L'invention vise à créer une cellule de mesure pour analyser la formation de la structure des alliages de telle structure qui permettrait de la rendre autonome et de prendre les échantillons en profondeur dans le métal liquide ce qui augmenterait la précision de l'analyse de la formation de la structure du métal.

Le problème est résolu du fait que dans une cellule de mesure pour analyser la formation de la structure des alliages qui comporte deux tubes en verre de quartz placés coaxialement et fixés au sommet et un thermocouple installé dans le tube intérieur, le tube extérieur étant muni d'une coiffe avec un orifice de prise d'échantillon se trouvant dans la partie supérieure de la coiffe, dans la zone de son accouplement au tube, conformément à l'invention, la partie supérieure du tube extérieur porte fixée une douille en un matériau réfractaire abritant un porte-thermocouple avec bornes incorporées, alors que la zone de liaison du thermocouple avec les bornes est disposée entre la douille et le porte-thermocouple et est isolée du milieu extérieur.

Il est souhaitable d'utiliser une céramique réfractaire comme matériau réfractaire.

On peut mettre sur la douille une chemise sous la forme d'un tube en carton.

Une telle exécution de la construction de la cellule de mesure permet d'éviter la formation de retassures dans la zone de la soudure du thermocouple.

La disposition de l'accouplement du thermocouple aux bornes dans un espace d'air isolé du milieu extérieur par une douille en un matériau réfractaire permet de réduire au minimum l'influence de la température ambiante sur les indications du thermocouple.

L'utilisation de la chemise mise sur la douille permet de prendre des échantillons en profondeur dans le métal fondu.

Description succinte des dessins.

L'invention ressortira de la description qui suit d'un exemple concret de son exécution représenté schématiquement sur les dessins annexés dans lesquels :

La figure 1 représente une vue d'ensemble en coupe de la cellule de mesure pour analyser la formation de la structure de l'alliage, objet de l'invention,

La figure 2 est similaire à la figure 1, mais avec du métal fondu dans la coiffe ;

La figure 3 représente une courbe de cristallisation.

Mode de réalisation préféré de l'invention.

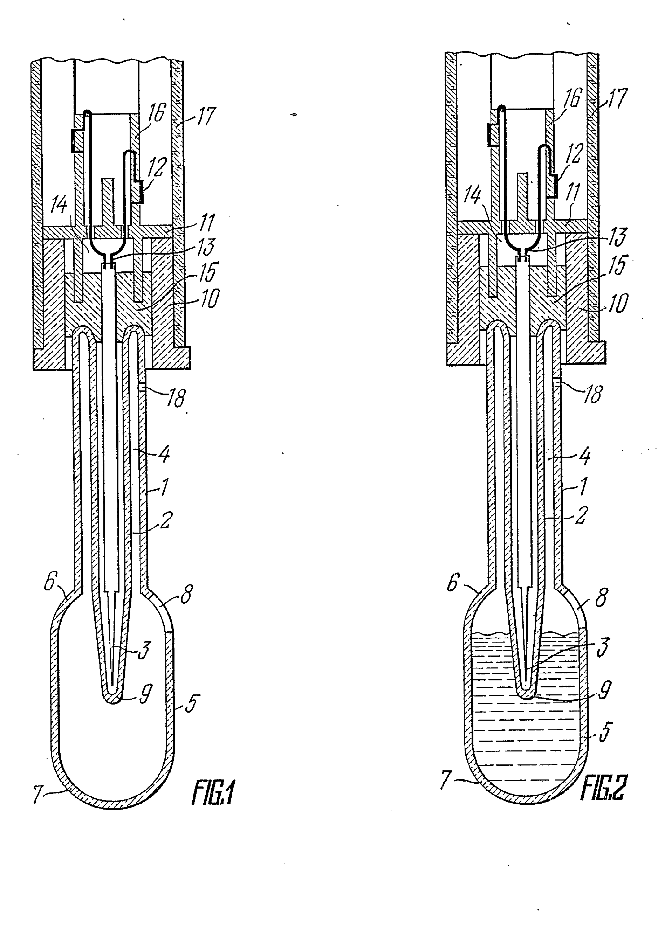

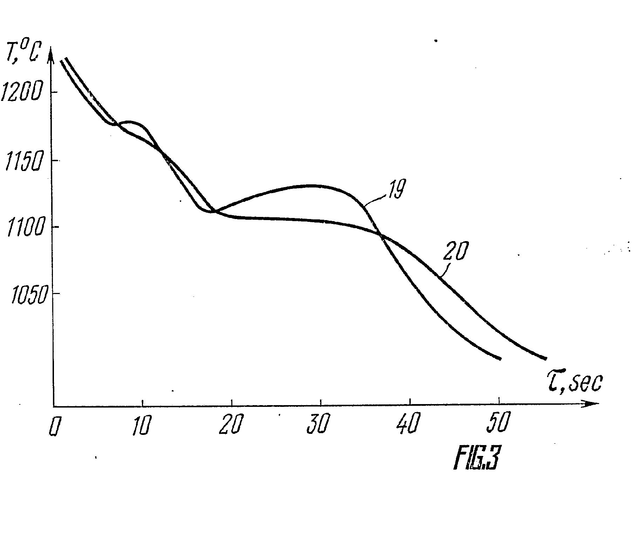

La cellule de mesure pour analyser la formation de la structure des alliages comporte deux tubes 1, 2 (fig. 1, 2), en verre de quartz placés coaxialement et un thermocouple 3. Les tubes 1 et 2 sont fixés de façon qu'entre eux se forme une cavité annulaire 4.

Au bout inférieur du tube extérieur 1 est réalisée une coiffe 5, par exemple, de forme cylindrique dont le haut 6 et le fond 7 sont sphériques comme le montre la figure 1.

Dans la partie supérieure de la coiffe 5, dans la zone de son accouplement au tube, autrement dit sur le haut 6, est pratiqué un orifice 8 pour prendre le métal liquide.

Le tube intérieur 2 a un bout inférieur 9 fermé par soudure se disposant dans la coiffe 5 et servant à protéger le thermocouple 3 se trouvant dans le tube intérieur 2, dans sa partie inférieure, comme le montre

la figure 1, autrement dit dans le centre thermique de la coiffe. Le tube intérieur 2 peut avoir une forme en U et contenir un thermocouple.

La partie supérieure du tube extérieur 1 porte fixée une douille 10 en matériau réfractaire, par exemple, en céramique réfractaire. La douille 10 contient le porte-thermocouple 11 du thermocouple 3 avec des bornes 12 incorporées, la zone 13 de raccordement du thermocouple 3 aux bornes 12 se situe dans un espace 14 entre la douille 10 et le porte-thermocouple 11 et est isolée du milieu extérieur par le porte-thermocouple 11 et par les parois de la douille 10, comme le montrent les figures 1 et 2.

La douille 10 et le porte-thermocouple 11 sont fixés au tube extérieur 1 à l'aide d'un revêtement réfractaire 15 de composition connue.

Dans la partie supérieure 16 du porte-thermocouple 11 sont incorporées des bornes 12. Sur la douille 10, est mise une chemise 17 formée par un tube en carton. La partie supérieure du tube extérieur 1 comporte un orifice 18 pour évacuer l'air durant la prise de l'échantillon.

La cellule de mesure fonctionne de la façon suivante.

La cellule de mesure est immergée dans le métal liquide, on la maintient jusqu'au remplissage de la coiffe 5 en métal liquide à travers l'orifice 8. On remarquera ici que dans le cas où la cellule de mesure est utilisée sans chemise 17 (tube en carton), on l'immerge jusqu'au niveau de la douille en céramique 10. Lorsqu'on utilise la chemise 17, on immerge la cellule à une profondeur permise par la longueur de cette chemise 17. Ensuite, la cellule de mesure est retirée et on enregistre la courbe de cristallisation du métal.

La structure proposée de la cellule de mesure permet : d'exclure l'apparition de retassures parce que l'orifice de la coiffe pour la prise de l'échantillon se trouve dans sa partie supérieure ; d'augmenter la précision de l'analyse de la formation de la structure parce qu'au moment de cristallisation de l'échantillon, la soudure du thermocouple ne se trouve pas dans une retassure, mais à l'axe thermique de l'échantillon, dans le métal fondu. Comme l'accouplement du thermocouple 3 aux bornes 12 se trouve dans un espace d'air isolé du milieu extérieur et protégé par la douille 10 en matériau réfractaire, on arrive à réduire au minimum l'influence de la température ambiante sur les indications du thermocouple.

La figure 3 représente une courbe de cristallisation des échantillons obtenue en utilisant d'une part la cellule de mesure proposée (courbe 19) et d'autre part la technique antérieure (courbe 20). On y voit que la courbe 20 est moins abrupte que la courbe 19 et ceci démontre clairement que la courbe 19 reflète d'une façon plus complète les processus thermiques se déroulant dans l'échantillon du métal liquide en voie de cristallisation.

Les données comparatives concernant l'échantillonneur connu et celui revendiqué, obtenues à l'analyse thermographique font l'objet des tableaux 1 à 3.

Le tableau 1 montre l'influence de la température ambiante sur les indications du thermocouple en fonction de l'endroit de disposition de l'accouplement du thermocouple aux bornes. L'utilisation pour cette cellule de mesure de la douille 10 en un matériau réfractaire permet d'appliquer cette cellule pour la prise d'un échantillon porté à haute température (les données comparant l'utilisation du dispositif revendiqué et la technique antérieure, aux différentes températures maximales, font l'objet du tableau 2). L'utilisation du dispositif revendiqué permet de réduire le temps de l'analyse de cristallisation de l'alliage de 30% du fait que la cellule revendiquée n'exige pas la disposition de la soudure du thermocouple dans le centre thermique de l'échantillon parce que ceci est obtenu par le porte-thermocouple fixe avec bornes (les données comparatives de réduction du temps d'analyse font l'objet du tableau 3).

Tableau 1

| Indications de la température | | | | | |
| --- | --- | --- | --- | --- | --- |
| Tempé-rature °C | Accouplement du thermocouple aux bornes à l'exté-rieur (technique antérieure) | Erreur % | Accouplement du thermocouple aux bornes à l'inté-rieur (revendi-qué) | Erreur % |
| 1200 | 1217 | 1,4 | 1205 | 0,4 |
| 1300 | 1346 | 3,5 | 1324 | 1,8 |
| 1400 | 1494 | 6,7 | 1427 | 1,9 |
| 1500 | 1642 | 9,5 | 1532 | 2,1 |

Tableau 2

| Température maximale à laquelle on peut utiliser la cellule de mesure, °C | |
| --- | --- |
| Technique antérieure | 1340 à 1380 |
| Cellule revendiquée | 1480 à 1520 |

Tableau 3

| Utilisation de l'invention pour différentes techniques d'élaboration du métal | Durée d'analyse de la formation de la structure d'alliage, s | | Différence % |
|---|---|---|---|
| | Technique antérieure | Selon l'invention | |
| 1. Four à arç électrique | 155 | 112 | 27,7 |
| 2. Four à cubilot | 193 | 121 | 37,3 |
| 3. Four à induction | 207 | 145 | 29,9 |

L'utilisation de la cellule de mesure considérée permet d'élargir les possibilités technologiques de l'analyse de cristallisation du métal par prise d'un échantillon dans la profondeur du métal liquide grâce à la présence d'un tube en carton mis sur la douille en matériau réfractaire.

Applicabilité industrielle.

L'utilisation de la cellule de mesure du type considéré s'insère bien dans le contrôle automatisé de la qualité du métal durant sa fusion commandée par un calculateur.

Revendications.

1. Cellule de mesure pour analyser la formation de la structure des alliages qui comporte deux tubes (1 et 2) en verre de quartz montés coaxialement et fixés en haut et un thermocouple (3) disposé dans le tube intérieur (2), alors que le tube extérieur (n) est muni d'une coiffe (5) avec un orifice (8) pour la prise d'échantillon disposé dans la partie supérieure de la coiffe (5), dans la zone de son accouplement au tube (1), caractérisée en ce que la partie supérieure du tube extérieur (1) porte fixée une douille (10) en un matériau réfractaire abritant un porte-thermocouple (11) du thermocouple (3) avec des bornes (12) incorporées, la zone (13) de raccordement du thermocouple (3) aux bornes (12) se situant entre la douille (10) et le porte-thermocouple (11) et étant isolée du milieu extérieur.

2. Cellule de mesure selon la revendication 1, caractérisée en ce que le matériau réfractaire de la douille (10) utilisé est une céramique réfractaire.

3. Cellule de mesure selon la revendication 1 ou 2, caractérisée en ce que sur la douille (10) il est disposée une chemise (17) formée par un tube en carton.

FIG.1

FIG.2

FIG.3

# INTERNATIONAL SEARCH REPORT

International Application No PCT/SU 89/00054

## I. CLASSIFICATION OF SUBJECT MATTER (If several classification symbols apply, indicate all) 6

According to International Patent Classification (IPC) or to both National Classification and IPC

IPC[4] G 01 N 33/20, 25/02, 25/12

## II. FIELDS SEARCHED

| Minimum Documentation Searched 7 | |
|---|---|
| Classification System | Classification Symbols |
| IPC[4] | G 01 N 33/20, 25/02, 25/12 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, B2, 61-20814, (NIPPON KOKAN KK.), 23 May 1986 (23.05.86), see fig. 1 & US, A, 4128983 , 12.12.78 | 1,2 |
| A | JP, B2, 61-48104,(NIPPON KOKAN KK.), 22 October 1986 (22.10.86), see figs. 1-3 | 1 |
| A | JP, B2, 61-56783, (NIPPON KOKAN KK.), 04 December 1986 (04.12.86), see figs. 1,2 | 2,3 |
| A | FR, A1, 2449890, (ELECTRO-NITE NV), 19 September 1980 (19.09.80), see figs. 1,2 & ZA, A, 801036, 25.03.81 BE, A2, 881886, 25.08.80  BR, A, 8001081, 29.10.80 | 3 |
| A | SU, A 1, 1350611, (Moskovsky avtomobilny zavod im. I.A. Likhacheva), 07 November 1987 (07.11.87), see the claims, the example | 1,2 |
| A | SU, A1, 1114949, (Zaporozhsky mashinostroitelny institut im. V. Ya. Chubarya), 23 September 1984 (23.09.84), see the claims | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 06 June 1989 (06.06.89) | 19 July 1989 (19.07.89) |
| International Searching Authority      ISA/SU | Signature of Authorized Officer |

Form PCT/ISA/210 (second sheet) (January 1985)